(19) Europäisches Patentamt
European Patent Office
Office européen des brevets

(11) **EP 1 983 352 B1**

(12) **EUROPEAN PATENT SPECIFICATION**

(45) Date of publication and mention
of the grant of the patent:
**25.05.2011 Bulletin 2011/21**

(51) Int Cl.:
***G01S 7/02*** *(2006.01)*

(21) Application number: **07251639.6**

(22) Date of filing: **19.04.2007**

(54) **Analysis of trains of pulses**

Analyse von Impulszügen

Analyse de trains d'impulsions

(84) Designated Contracting States:
**DE FR GB**

(43) Date of publication of application:
**22.10.2008 Bulletin 2008/43**

(73) Proprietors:
• **Mitsubishi Electric Information Technology Centre**
**Europe B.V.**
**Guildford,**
**Surrey GU2 7YD (GB)**
Designated Contracting States:
**GB**
• **MITSUBISHI ELECTRIC CORPORATION**
**Chiyoda-ku**
**Tokyo 100-8310 (JP)**
Designated Contracting States:
**DE FR**

(72) Inventor: **Szajnowski, Wieslaw Jerzy**
**Surrey, GU1 2AR (GB)**

(74) Representative: **Brinck, David John Borchardt et al**
R.G.C. Jenkins & Co
26 Caxton Street
London SW1H 0RJ (GB)

(56) References cited:
**EP-A1- 1 777 531     US-B1- 6 985 102**

• **MARDIA H K: "NEW TECHNIQUES FOR THE DEINTERLEAVING OF REPETITIVE SEQUENCES" IEE PROCEEDINGS F. COMMUNICATIONS, RADAR & SIGNAL PROCESSING, INSTITUTION OF ELECTRICAL ENGINEERS. STEVENAGE, GB, vol. 136, no. 4, PART F, 1 August 1989 (1989-08-01), pages 149-154, XP000052595 ISSN: 0956-375X**
• **RAY P S: "A novel pulse TOA analysis technique for radar identification" IEEE TRANSACTIONS ON AEROSPACE AND ELECTRONIC SYSTEMS, IEEE SERVICE CENTER, PISCATAWAY, NJ, US, vol. 34, no. 3, July 1998 (1998-07), pages 716-721, XP002369333 ISSN: 0018-9251**
• **MILOJEVIC D J ET AL: "IMPROVED ALGORITHM FOR THE DEINTERLEAVING OF RADAR PULSES" IEE PROCEEDINGS F. COMMUNICATIONS, RADAR & SIGNAL PROCESSING, INSTITUTION OF ELECTRICAL ENGINEERS. STEVENAGE, GB, vol. 139, no. 1 PART F, 1 February 1992 (1992-02-01), pages 98-104, XP000257895 ISSN: 0956-375X**

**Description**

BACKGROUND OF THE INVENTION

Field of the Invention

This invention relates to a method and apparatus for analysing and classifying events such as electromagnetic pulses that exhibit some specific periodic or regular patterns, and is especially, but not exclusively, applicable to predicting time intervals free from radio frequency pulse bursts which may occur in radio communication or sensor networks sharing the same frequency band with various radiolocation services.

Description of the Prior Art

In many instances, an observed signal that represents a phenomenon of interest may include a plurality of interleaved pulse trains (or bursts) produced by an unknown number of different sources. Often, there is a need to assign each observed pulse train to a corresponding source from which the train emanates. In general, such an association procedure is based on the assumption that different sources will produce pulse trains with different parameters, such as pulse amplitude, pulse shape and duration, and interpulse interval. In an electromagnetic environment, pulse classification and association may also be based on other characteristics including observed direction of arrival, carrier frequency and polarization, type of intrapulse modulation, etc.

The above task of pulse association, commonly referred to as 'pulse deinterleaving', has many well-known applications in various areas including seismic exploration, computer communications, neural pulse networks, radioastronomy (e.g., search for pulsars) etc. Recently, there have been attempts to apply pulse deinterleaving in its rudimentary form to an emerging area of intelligent (or 'cognitive') radio communication systems.

The concept of intelligent radio is based on adaptive utilisation of the idle (in space, time or frequency) portions of the spectral band that in its entirety has been assigned by an appropriate regulatory authority to various commercial and military users. It is expected that adaptive spectrum utilization will, at least partly, satisfy the growing demand for frequency spectrum to support various wideband communication and multimedia services, and also surveillance applications.

A common approach used by intelligent systems to optimise the spectrum utilization includes the following steps:

- sensing the surrounding electromagnetic environment to identify the spectrum opportunities;
- suitably using the idle spectral segments to perform intended operations, such as sensing or information transmission;
- vacating the spectral segments before the primary, or higher priority, user appears.

Irrespective of the approach used, an intelligent system has to demonstrate both its awareness of the surrounding electromagnetic environment and the ability to react in an automatic manner.

One example of intelligent radio systems under development in the 5 GHz frequency band (frequencies between 5 GHz and 6 GHz) is a class of wireless local area networks (WLANs) arranged to operate in compliance with various international standards, such as those developed by the Institution of Electrical and Electronic Engineers (IEEE) and the European Telecommunications Standards Institute (ETSI). Making this segment of spectrum available to WLANs has resulted in the necessity of sharing the spectrum with primary systems, notably licensed radars operating in the 5 GHz band.

Since both radar systems and WLAN wireless devices are allowed to operate in the same frequency band, a mechanism of *dynamic frequency selection* (DFS) has been developed by the WLAN industry to avoid the need for frequency coordination in order to eliminate mutual interference. Accordingly, when the presence of a radar signal has been detected on a particular channel, the WLAN devices must switch automatically to another channel to avoid interfering with the radar signal.

The expanding role of radars in support of homeland security will result in their deployment at sites different from those previously used. Consequently, radars and other sensor networks will have to operate in the same geographic region and may advantageously share the same frequency band. Radars and other sensors operating in a networked configuration will provide improved continuous surveillance of critical infrastructure, including power grids and plants, gas and oil pipelines and water supply systems.

Another important application is that of coastguard or littoral surveillance in which speedboats and other surface vessels of interest can be detected and localised by a network of floating buoys employing acoustic and other sensors. Those sensors will have to exchange information via radio communication links, sharing advantageously the same frequency band with stationary and airborne surveillance radars.

While the existing regulatory standards provide simple guidelines for radar detection and avoidance, no specific method is given for intercepting and analysing composite electromagnetic signals to determine the parameters of radar signals.

Examples of prior art related to radar pulse detection and avoidance in communication networks are presented in the following Patents and Patent Application Publications:

1. EP 1 505 772 A1, Kruys et al., 9 Feb. 2005
2. US 6,831,589 B2, Shearer III, 14 Dec. 2004
3. US 2004/0156336 A1, McFarland et al., 12 Aug. 2004
4. US 2004/0151137 A1, McFarland et al., 5 Aug. 2004
5. US 6,697,013 B2, McFarland et al., 24 Feb. 2004 (also WO 03/050560, 19 Jun. 2003)
6. US 2004/0033789 A1, Tsien, 19 Feb. 2004
7. US 2003/0214430 A1, Husted et al., 20 Nov. 2003
8. US 2003/0206130 A1, Husted et al., 6 Nov. 2003
9. US 2002/0155811 A1, Prismantas et al., 24 Oct. 2002
10. WO 02/082844 A3, Zimmermann et al., 17 Oct. 2002 (also EP 1 248 477 A1, 9 Oct. 2002)

While the above list is not intended to be exhaustive, the techniques and embodiments disclosed in the cited documents appear to represent the state of the art related to the coexistence of WLAN devices and radar systems.

None of the prior-art techniques is capable of determining the characteristics of interleaved radar pulse bursts emitted by a plurality of radars operating in the same frequency band, especially when in the observed composite pulse stream some radar pulses may be missing and some 'false' pulses (e.g., generated by noise) may appear. Accordingly, it would be desirable to provide a robust technique for determining the parameters of interleaved pulse bursts, such as interpulse interval within each burst, burst duration, burst repetition frequency, and also time shift between bursts originated from different radar systems.

In most cases surveillance radars emit (in any particular direction) bursts of pulses intermittently, in contrast to a continuous pulse transmission; consequently, the frequency band used for transmission will remain idle between the bursts. Therefore, it would be desirable to provide an adaptive method offering improved spectrum utilization when multiple surveillance radars with intermittent transmission operate in the same frequency band as do other RF devices that employ wideband or ultrawideband (UWB) signals for sensing or information transmission.

The article "New techniques for the deinterleaving of repetitive sequences" by H.K. Marida (see IEE Proceedings F. Communications, Radar Signal Processing, Institution of Electrical Engineers, Stevenage, GB, vol. 136, no. 4, part F, pages 149-154) discusses various time-of arrival (TOA) deinterleaving algorithms. One techniques employs a TOA difference histogram in which each TOA is subtracted from every subsequent TOA and a count is accumulated at each TOA difference.

<u>SUMMARY OF THE INVENTION</u>

Aspects of the present invention are set out in the accompanying claims.

In an embodiment, the pulse repetition interval of a group of pulses is calculated by determining an angular average of approximate pulse repetition intervals as determined by measuring pulse arrival times. In particular, the measured pulse repetition intervals are converted to vectors with angles linearly distributed over an angular range of $\pi$ or less, the end points of the range corresponding to predetermined minimum and maximum expected pulse repetition intervals. Averaging is accomplished by determining the angle of the vector sum, this angle then representing an accurate estimate of the actual pulse repetition interval.

Preferably, a weighted angular average is derived, with the arrival times of those pulses further away from the central pulse having a relatively large influence. Thus, larger measured intervals, on which rounding errors have proportionally less effect, are more influential.

BRIEF DESCRIPTION OF THE DRAWINGS

Arrangements embodying the present invention will now be described by way of example with reference to the accompanying drawings.

Fig. 1 is an example of a security system comprising a constellation of sensors, S1, S2, ... , SK, a plurality of surveillance radars R1, R2, ... , RL, an information fusion centre IFC, and a radar signal analyser RSA.

Fig. 2 is a block diagram of a radar signal analyser RSA arranged to operate in accordance with the invention.

Fig. 3a shows an example of three sequences of pulse bursts; Fig. 3b depicts a segment of a composite signal comprising partly overlapped pulse bursts, and Fig. 3c depicts a binary clear-to-transmit signal.

Fig. 4 shows an example of a time-varying signal envelope to be compared to two decision thresholds in accordance with the invention.

Fig. 5 is a diagram illustrating the method employed for a preliminary determination of a candidate pulse repetition interval.

Fig. 6 is an example of mapping an event quintuple onto the circumference of the unit semicircle.

Fig. 7 depicts a maximally discordant event quintuple.

Fig. 8 is a block diagram of a repetition interval estimator of the analyser of Fig. 2.

Fig. 9 shows schematically operations performed in accordance with the invention on events occurring within a plurality of time frames to produce a histogram and determine the number of pulses per burst.

Fig. 10 is a diagram illustrating the method employed for a preliminary determination of a candidate pulse repetition interval in accordance with the invention.

## DETAILED DESCRIPTION OF THE PREFERRED EMBODIMENTS

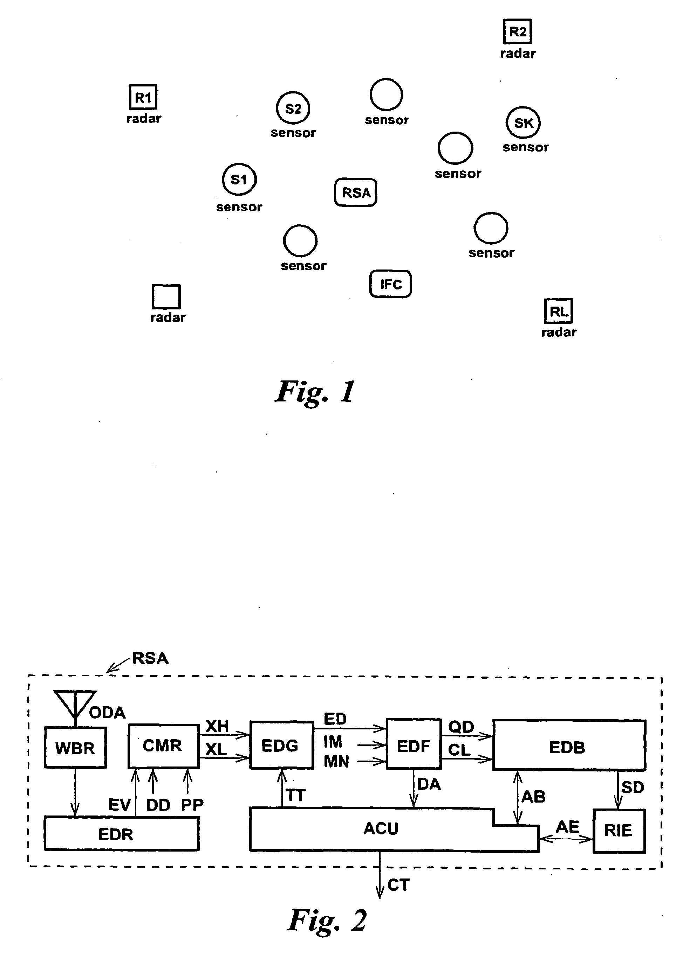

Fig. 1 depicts an example of a security surveillance system that comprises a constellation of suitable sensors, S1, S2, ... , SK, dispersed over some region of interest, and an information fusion centre IFC. The constellation may utilize either passive or active sensors, or a combination of those. Furthermore, sensors forming the constellation may be disparate, e.g., acoustic, infrared or electromagnetic.
A wideband radar signal analyser RSA is also utilized by the sensor constellation.
It is assumed that there is provided a wideband communication channel available for high data-rate information exchange among the sensors and the information fusion centre. It is also assumed that in the vicinity of the sensor constellation there are operating surveillance radars, R1, R2, ... , RL, that for their transmission utilize (at least partly) frequency bands coinciding with those forming the wideband communication channel.
It is also assumed that each of the surveillance radars, R1, R2, ... , RL, employs a rotating antenna to provide a 360-degree coverage. As a result, the sensor constellation will only be affected by a radar pulse transmission when the radar's antenna is pointing directly at the constellation location. At that location, each operating radar will manifest its presence by periodic pulse bursts sent toward the constellation.
The time duration of each pulse burst will be determined by the rate of antenna rotation and the angular width of the antenna beam; the number of radar pulses occurring in each burst will depend on the burst duration and the pulse repetition frequency used by the radar. When several radars with different characteristics are operating simultaneously, the sensor constellation will receive a composite pulse signal that will comprise both interleaved pulse bursts and interleaved pulses occurring within partly or fully overlapping bursts.
The wideband radar signal analyser RSA, constructed in accordance with the invention, will perform the following functions and operations:

- detection of pulses exceeding a predetermined detection threshold; each detected pulse may be a 'valid' radar pulse or it may be produced by noise or interference not related to any of the operating radars;
- analysis of the composite stream of events determined by the registered values of time of arrival (TOA) of detected pulses to determine the number of periodic pulse bursts, the period of each burst and its duration;
- prediction of time intervals free from radar pulse bursts; the predicted intervals are to be used for high data-rate information exchange among the sensors and the information fusion centre IFC utilized by the constellation;
- generation of a suitable signal to indicate clear-to-transmit time intervals; such signal may be sent to the information fusion centre IFC for the coordination of information transmission within the sensor constellation.

Fig. 2 is a block diagram of a radar signal analyser (RSA) arranged to operate in accordance with the invention. The analyser comprises an omnidirectional antenna (ODA) connected to a wideband receiver (WBR) that is followed by an envelope detector (EDR). The analyser also comprises a comparator (CMR), an event descriptor generator (EDG), an event descriptor filter (EDF), an event descriptor buffer (EDB), a repetition interval estimator (RIE) and an arithmetic/control unit (ACU) that produces a clear-to-transmit signal CT, all of which could be implemented in hardware and/or software.

It is assumed that during its operation the radar signal analyser RSA is intercepting either wideband noise or a plurality of pulse bursts produced by an unknown number of radar emitters that may be operating within the wide frequency band covered by the wideband receiver (WBR). Parameters of each intermittent radar transmission, such as pulse duration, pulse peak power, burst duration (BD), burst repetition interval (BRI) and pulse repetition interval (PRI) within burst are all assumed to be unknown *a priori.*

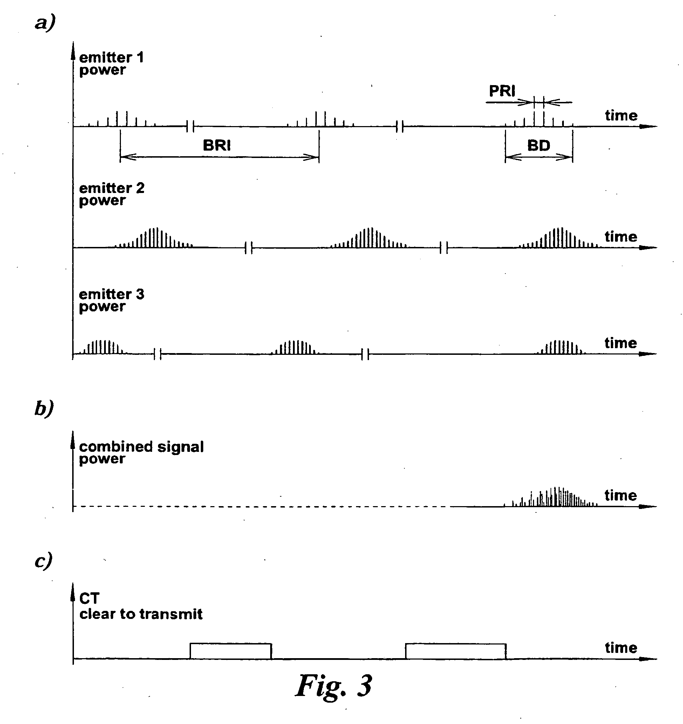

Fig. 3a shows an example of three sequences of pulse bursts produced by three respective radar emitters. Each sequence is characterised by its own burst repetition interval (BRI), within-burst pulse repetition interval (PRI) and burst duration (BD). The radar signal analyser RSA is intercepting a composite signal being an additive combination of those pulse bursts.

Fig. 3b depicts a segment of a composite signal comprising partly overlapped pulse bursts, and Fig. 3c shows an example of a desired binary clear-to-transmit signal CT to be produced by the arithmetic/control unit ACU.

The level of a composite signal envelope EV supplied by the envelope detector EDR is compared in the comparator CMR with two suitably chosen predetermined thresholds: a lower threshold DD and a higher threshold PP. If, at a certain time instant, the lower threshold DD has been exceeded by the envelope EV, then a pulse detection is declared. If the higher threshold PP has also been exceeded by the envelope EV, then there will be even greater probability that the observed signal represents a 'valid' radar pulse rather than a noise spike. As will be explained in the following, pulses that have been detected with greater confidence play an important role in efficient determination of pulse bursts and their respective parameters.

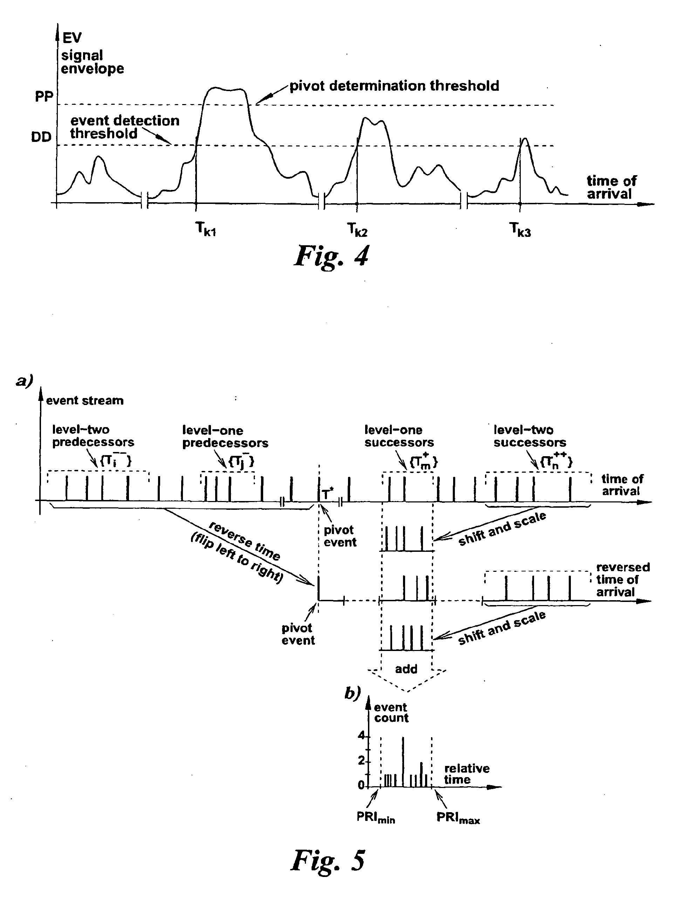

Fig. 4 shows an example of a time-varying envelope EV of a signal intercepted by the radar signal analyser RSA. In this example, the envelope has crossed the lower threshold DD at three time instants, $T_{k1}$, $T_{k2}$ and $T_{k3}$; each of these time instants determines the time of arrival (TOA) of an event equal to the time instant at which the threshold DD has been crossed. As seen, the envelope EV, having crossed the lower threshold DD at $T_{k1}$, has also crossed immediately after the higher threshold PP. All events representing such cases will be distinguished from other events that correspond to situations in which the envelope crosses only the lower threshold DD, and remains below the higher threshold PP during a predetermined time interval.

In the following, the lower threshold DD and the higher threshold PP will be referred to, respectively, as the *event detection* threshold and *pivot determination* threshold. Accordingly, each *pivot event* will represent a situation in which the envelope crosses both the detection threshold DD at $T_k$, and the pivot determination threshold PP within the time interval $[T_k, (T_k + \delta)]$, where $\delta$ has a predetermined value (e.g., $\delta = 0.2 \ \mu s$).

The value of the event detection threshold DD is so selected as to keep the number of upcrossings due to noise alone at some acceptable level. For example, when Gaussian noise is passed through a bandpass filter with a centre frequency $f_0$ and rectangular frequency characteristic $|f - f_0| < \Delta F/2$, then the envelope of the noise signal obtained at the filter's output will, on average, produce $N^+$ upcrossings of level $\lambda$ within the time interval of duration T, where

$$ N^+ \ = \ T \ \Delta F \ \sqrt{\frac{\pi}{3}} \ \left( \frac{\lambda}{\sigma_E} \right) \exp\left[ - \left( \frac{\lambda}{\sigma_E} \right)^2 \right] $$

.

and $\sigma_E$ is the root-mean-square value of the envelope.

For example, if $\Delta F = 10$ MHz and $\lambda = 3.5\sigma_E$, then, on average, 17 upcrossings will be registered in the interval of 100 ms duration. However, when the crossing level $\lambda$ is decreased to $\lambda = 3\sigma_E$, the average number of upcrossings observed in the interval of 100 ms will rise to 380.

The value of the pivot determination threshold PP can be expressed as PP = g DD, where the constant g > 1 can be determined either empirically or from a theoretical analysis.

The two binary outputs XL and XH of the comparator CMR of Fig. 2 represent, respectively, crossings of the event detection threshold DD and pivot determination threshold PP. The event descriptor generator EDG combines outputs (XL, XH) of the comparator CMR with a *time tag* TT supplied by the arithmetic/control unit ACU, which for this purpose comprises a clock circuit with a suitably chosen frequency. An event descriptor ED produced by the event descriptor generator EDG has the form of a binary word in which L bits represent a time tag TT (i.e., time of arrival $T_k$) of a detected event, and a single additional bit identifies a pivot event.

The main task of the event descriptor filter EDF is to decide whether or not a stream of event descriptors ED being supplied by the event descriptor generator EDG constitutes a pulse burst. Accordingly, the event descriptor filter EDF applies the two following criteria:

    A. <u>continuity criterion:</u> the time interval between consecutive events must be shorter than a predetermined admissible maximum value IM, i.e.,

$$T_{k+1} - T_k < IM;$$

B. integrity criterion: the number of consecutive events CP satisfying criterion A must be greater than a predetermined allowable minimum value MN, i.e.,

$$CP > MN.$$

The continuity criterion A may also take into account missing single pulses; for example, when the maximum pulse repetition interval PRI is equal to 5 ms, and single pulses may be missing, the selected value of IM will be slightly greater than 10 ms.

With regard to the integrity criterion B, the minimum value of MN will be equal to the smallest number of pulses expected to occur in a single pulse burst minus the allowed total number of missing pulses; for example, when only eight pulses are expected to occur within a burst and in total three pulses are allowed to be missing, the selected value of MN will be four (i.e., CP > 4).

Both the above criteria must be satisfied in order to declare that a stream of event descriptors ED under examination constitutes a valid pulse burst or a number of overlapped pulse bursts.

The event descriptor filter EDF is transferring continually event descriptors ED to the event descriptor buffer EDB as long as $T_{k+1} - T_k < IM$. The transfer terminates as soon as $T_{k+1} - T_k \geq IM$, or as soon as the buffer EDB is full. A situation of the full buffer may for example occur when in addition to stationary radars the region of interest is illuminated by an airborne system performing imaging functions.

The event descriptor buffer EDB will be cleared via input CL, if CP < MN. Otherwise, the entire burst, or a combination of bursts, will have been stored in the event descriptor buffer EDB. In such a case, a data-available signal DA is sent from the event descriptor filter EDF to the arithmetic/control unit ACU.

The received data-available signal DA initiates the process of analysis of the sequence of event descriptors stored in the buffer EDB. The analysis is performed by the arithmetic/control unit ACU and the repetition interval estimator RIE, operating jointly on event descriptors stored in the buffer EDB.

The event descriptor analysis comprises three basic operations performed repeatedly:

1. determination of a candidate pulse repetition interval PRI;
2. precise estimation of the hypothesized pulse repetition interval PRI;
3. validation of the hypothesized pulse repetition interval PRI and determination of the number of pulses occurring in a burst under analysis.

A successful implementation of those three operations will result in the removal from the buffer EDB (buffer 'depopulation') those event descriptors which constitute the pulse burst being positively identified. Then, if a sufficient number of event descriptors remain in the buffer EDB, the sequence of those three operations will be repeated.

In the following, the three basic operations will be described in more detail.

Determination of a candidate pulse repetition interval PRI

Preliminary determination of a candidate PRI is based on a time-domain analysis of event patterns. Preferably, event patterns to be employed will comprise a small number of events, e.g., three or five. In the following, such event patterns will be referred to, respectively, as *event triple* and *event quintuple.*

In an illustrative arrangement, irrespective of the particular form of an event pattern employed, first a suitable *pivot event* is selected from the events stored in the descriptor buffer EDB. It is reasonable to assume that a 'good' candidate pivot event will be found somewhere in the middle of the stored stream of events.

Furthermore, irrespective of the particular form of an event pattern, the search for a candidate pulse repetition interval PRI will start from the smallest expected value D of the PRI, e.g., D = $PRI_{min}$ = 200 μs.

*Event quintuple*

Let T* denote the time of arrival (TOA) of a selected candidate pivot event. Four groups of events will now be defined as follows:

*Level-one successors* are all those events whose time of arrival $T_m^+$ satisfies the condition

$$D < T_m^+ - T^* < pD, \ p > 1, \ m = 1, 2, \ldots, M$$

*Level-two successors* are all those events whose time of arrival $T_n^{++}$ satisfies the condition

$$2D < T_n^{++} - T^* < 2pD, \ p > 1, \ n = 1, 2, \ldots, N$$

*Level-one predecessors* are all those events whose time of arrival $T_j^-$ satisfies the condition

$$D < T^* - T_j^- < pD, \ p > 1, \ j = 1, 2, \ldots, J$$

*Level-two predecessors* are all those events whose time of arrival $T_i^-$ satisfies the condition

$$2D < T^* - T_i^{--} < 2pD, \ p > 1, i = 1, 2, \ldots, I$$

Thus, the upper and lower range limits defining the level-two pulses are twice the limits used to define the level-one pulses. Preferably, in the above conditions, the value of the parameter p will take on a value slightly less than 1.5.

It should be noted that a unique event quintuple will be formed by the selected pivot event and one level-one successor, one level-two successor, one level-one predecessor and one level-two predecessor. Among all thus formed event quintuples there may exist one quintuple, referred to as a *priming quintuple,* which represents a segment of a pulse burst with a PRI such that D < PRI < pD.

Fig. 5 is a diagram illustrating the method employed for a preliminary determination of a candidate pulse repetition interval PRI from a pivot event and four event sets comprising level-one successors, level-two successors, level-one predecessors and level-two predecessors.

In the illustrative arrangement, the four time intervals containing level-one and level-two events are collapsed onto a single time interval of duration (p-1)D according to the following rules:

1. interval comprising level-one successors will remain unchanged;
2. interval comprising level-two successors will be suitably shifted and scaled;
3. the duration of the interval comprising level-one predecessors will remain unchanged; however, only absolute values (magnitudes) of the distances from the pivot event will be used (time reversal);
4. the duration of the interval comprising level-two predecessors will be suitably scaled; absolute values of the distances from the pivot element will be suitably shifted and scaled (time reversal followed by scaling).

Accordingly, all events, except for the pivot event, will now be located within a single interval with its endpoints representing the minimum and the maximum values of the postulated candidate PRI. If in the analysed composite stream of events there exist events separated by a PRI with a value from the above interval, then in an ideal case of precise TOA measurements with no missing events, there will be exactly four events occupying the same location in the interval. Consequently, a precise estimate of the corresponding PRI would have been obtained from the position of a pronounced peak in a suitably constructed histogram, such as that shown in Fig. 5b.

If a single level-one event is missing it will still be possible to employ such an event set for further processing.

In practical cases, the peak observed in the histogram will be reduced and smeared due to:

- time quantisation effects (i.e., a finite number of bits representing time tags);
- finite rise time of intercepted pulses;
- time-of-arrival TOA time jitter due to noise.

Therefore, in practice, the peak position can only provide an approximate estimate of the PRI of interest. However, the histogram can be employed to identify four specific level-one and level-two events which, together with the already selected pivot event, will be used to construct a priming quintuple required for further processing. Therefore, a suitable analysis of the histogram will determine four underlying times of arrival, $T_0^{--}$, $T_0^-$, $T_0^+$ and $T_0^{++}$, of level-one and level-two events belonging to the priming quintuple.

If the histogram fails to identify a priming quintuple, a new pivot event will be selected from event descriptors of pivots stored in the buffer EDB, and the above operations will be repeated. If all potential pivots have been used, then a candidate pivot may be selected among other event descriptors stored in the buffer EDB. If this approach also fails to provide an acceptable priming quintuple, the search will be repeated for the next range of PRI values, i.e., $pD<PRI<p^2D$. For example, when in the entire range of interest, $PRI_{min} = 200\mu s$ and $PRI_{max} = 4$ ms, then for p = 1.46, such range of PRI values will be covered in eight passes. (In an alternative embodiment, the search is repeated for the successive ranges of PRI values irrespective of whether acceptable pulse groups are found.) Starting from the lowest range, rather than the highest, has the advantage of avoiding assigning to groups only those pulses arriving at second or higher harmonics of the pulse repetition interval.

Precise estimation of the hypothesized pulse repetition interval PRI

Information about the hypothesized pulse repetition interval PRI is contained in five TOA values, i.e., that of a pivot event and those of other four events forming the priming quintuple. Those values are then utilized by the repetition interval estimator RIE block to determine more precisely the value of the hypothesized pulse repetition interval PRI.

In the case of an event quintuple, four points representing level-one and level two events are all mapped onto the circumference of the unit semicircle $(0, \pi)$ with its centre representing symbolically one of the events, and preferably the pivot event, and its angular extent representing the range $PRI_{max} - PRI_{min} = \Delta$. (The points may instead be mapped onto any other arc, though the angular extent representing the range $\Delta$ should be less than or equal to $\pi$.) The mapping results in the pulse intervals (as determined relative to the pivot pulse) being represented by the angles of unit vectors.

Assume that an event quintuple under examination is represented by the following values of the time of arrival TOA: $T^*$, $T_0^{--}$, $T_0^-$, $T_0^+$ and $T_0^{++}$, of, respectively, the pivot event, level-two predecessor, level-one-predecessor, level-one successor and level-two successor. Then the angular position of each event on the unit semicircle can be determined from the following equations:

level-two and level-one predecessors

$$\theta_0^- = \pi \frac{T^* - T_0^{--} - 2PRI_{min}}{2\Delta} \quad , \qquad \theta_0 = \pi \frac{T^* - T_0^- - PRI_{min}}{\Delta}$$

level-one and level-two successors

$$\theta_0^+ = \pi \frac{T_0^+ - T^* - PRI_{min}}{\Delta} \quad , \qquad \theta_0^{++} = \pi \frac{T_0^{++} - T^* - 2PRI_{min}}{2\Delta}$$

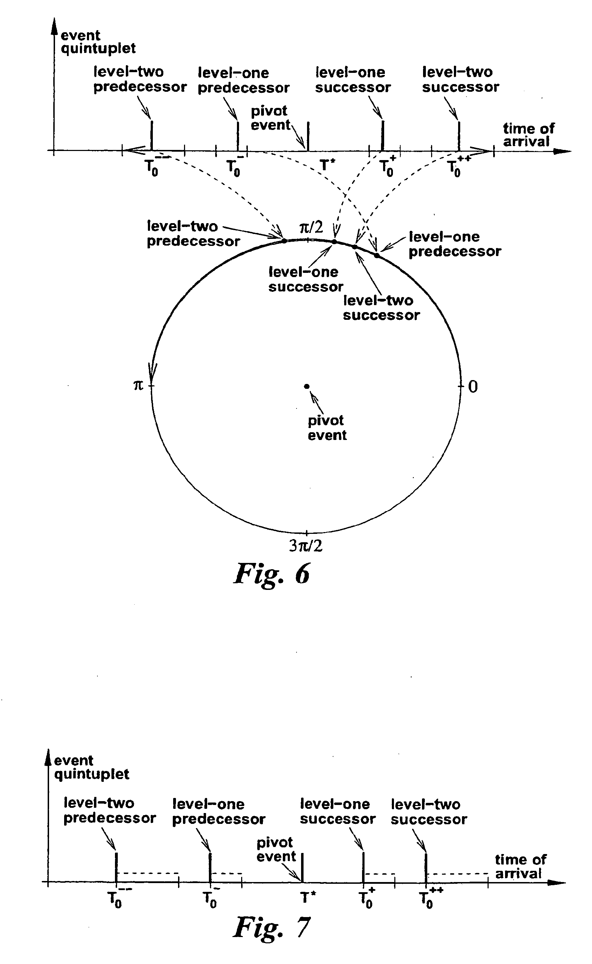

Fig. 6 is an example of mapping an event quintuple onto the circumference of the unit semicircle. The points on the semicircle $(0, \pi)$ represent the ends of unit vectors starting at the pivot event. The angular positions of the events are linearly related to the approximate pulse repetition intervals as determined by measuring each interpulse interval between the time of arrival of the respective pulse and the time of arrival of the pivot pulse.

Next, the most probable pulse repetition interval $PRI_m$ will be a weighted angular average calculated as follows:

$$PRI_m = \frac{\Delta}{\pi} \cotan^{-1}\left(\frac{C_m}{S_m}\right) + PRI_{min}$$

where $\cotan^{-1}\left(\dfrac{C_m}{S_m}\right)$ is the angle of the sum of the vectors, and

$$S_m = w_2\left(\sin\theta_0^{--} + \sin\theta_0^{++}\right) + w_1\left(\sin\theta_0^{-} + \sin\theta_0^{+}\right)$$

$$C_m = w_2\left(\cos\theta_0^{--} + \cos\theta_0^{++}\right) + w_1\left(\cos\theta_0^{-} + \cos\theta_0^{+}\right)$$

where $w_1$ and $w_2$ are predetermined weight coefficients. If $w_1 = w_2 = 1$ then $PRI_m$ is derived from the angle of the sum of unit vectors. However, preferably, $w_1 < w_2$, in which case $PRI_m$ is derived from the angle of the sum of vectors which are adjusted such that the lengths of the vectors representing the intervals measured using the level 2 events are larger in the ratio $w_2/w_1$ than the lengths of the vectors representing the intervals measured using the level one events. This weighting is carried out because rounding errors make the calculation of intervals less accurate if they are based on measurements of closer-spaced event timings. Preferably, the ratio $(w_2/w_1)$ of the level-two and level-one weights will assume a value between two and four.

Additionally, a measure $V_{PRI}$ of confidence of the above PRI estimate can be determined from the dispersion of the measured intervals, which can, for example, be calculated as:

$$V_{PRI} = \frac{S_m^2 + C_m^2}{4\left(w_1 + w_2\right)^2}$$

For high quality estimates of the PRI, the measure $V_{PRI}$ will assume values very close to unity. For example, when

$$\frac{T^* - T_0^{--}}{2} = \frac{T^{++} - T^*}{2} = T^* - T_0^{-} = T_0^{+} - T^*$$

the level-one and level-two events will be represented by a single point, and the value of $V_{PRI}$ will be equal to unity. However, for *maximally discordant events,* such as those shown in Fig. 7, the value of $V_{PRI}$ will be equal to zero.

A low value of the measure $V_{PRI}$ of confidence of the PRI estimate can be used independently to reject the already selected event quintuple; in such a case, the search for another quintuple will be repeated. On the other hand, if the measure $V_{PRI}$ exceeds a predetermined threshold, further processing of the group of events is carried out as described later, including locating other events which belong to the same group, and eliminating the events of the group from the received train of pulses from consideration for the purpose of classifying the remaining pulses into other groups.

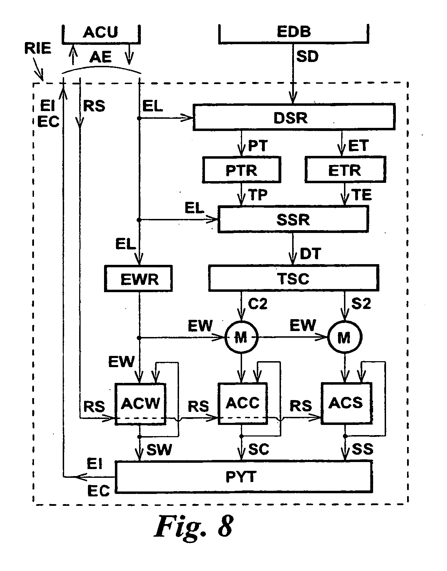

Fig. 8 is a block diagram of the repetition interval estimator RIE. The block RIE comprises a data selector DSR, a pivot register PTR and an event register ETR, a summing/scaling circuit SSR, a look-up table TSC, a weight register EWR, two identical multipliers M, three accumulators: ACC, ACS and ACW, and a Pythagoras processor PYT.

The arithmetic/control unit ACU selects an event quintuple and controls the transfer of corresponding descriptors from the buffer EDB to the RIE block via port SD. Also, event level and type (pivot or not) is sent via output EL of the unit ACU to: the data selector DSR, the summing/scaling circuit SSR, and the weight register EWR. As a result, a pivot descriptor (i.e., its TOA) PT is stored in register PTR, and an event descriptor ET is stored in register ETR. The outputs, TP and TE, of those registers are connected to the summing/scaling circuit SSR that produces at its output DT:

- for level-one events, an absolute value of the difference between the pivot TOA and the event TOA;
- for level-two events, a half of the absolute value of the difference between the pivot TOA and the event TOA.

The value DT is a suitably structured address used to obtain required values of the sine and cosine functions stored in the look-up table TSC. The required values, C2 and S2, are used with the appropriate weights EW by two identical multipliers M, to produce input data for the two accumulators ACC and ACS. The weights EW are supplied by the weight register EWR that receives information EL concerning the event level from the arithmetic/control unit ACU. The event weights EW are also used by the weight accumulator ACW. All accumulators are reset at the same time by a signal RS supplied by the arithmetic/control unit ACU.

Although the accumulator ACW is redundant when a complete event quintuple is being processed (and the sum of weights is known), a simple form of the accumulator ACW will be needed when a single level-one event is missing from an event quintuple. Similarly, when, during the operation of the radar signal analyser RSA, event quintuples are replaced by event triples, a different sum of weights will be obtained.

The outputs, SC and SS, of the accumulators ACC and ACS are connected to the Pythagoras processor that produces at its combined output EI/EC both the value of estimated pulse repetition interval $PRI_m$ and the confidence measure $V_{PRI}$ associated with the estimated value. Both values, $PRI_m$ and $V_{PRI}$, are utilized by the arithmetic/control unit ACU for further processing.

Validation of the hypothesized pulse repetition interval PRI and determination of the number of pulses per burst

The estimated value $PRI_m$ supplied by the RIE block is utilized by the arithmetic/control unit ACU to determine the number of pulses occurring within a burst characterized by this specific PRI. For this purpose, a simple impulse template is employed to determine a plurality of consecutive frames and relative locations of events within each of the frames.

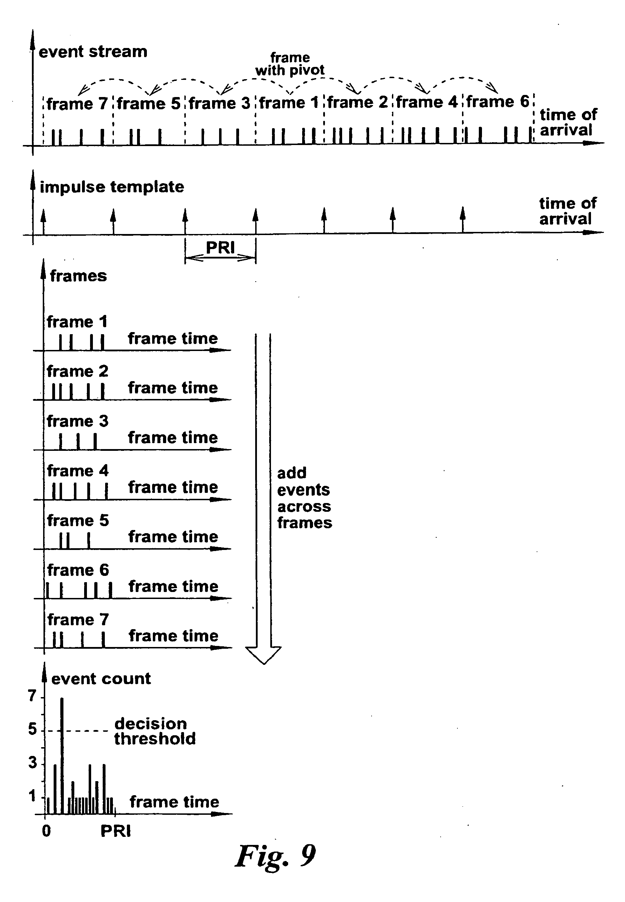

Fig. 9 shows schematically operations performed by the arithmetic/control unit ACU. The unit ACU operates by dividing the received signal into time frames of predetermined length. Events occurring within each time frame are combined to produce a histogram from which an event count, i.e., the number of pulses per burst, can be determined. Initial frames used for event integration will be those containing the events from the priming quintuple (or a triple); then, other frames, both preceding and succeeding, will be examined, while the resulting histogram will be monitored for pulse continuity. For example, if two consecutive frames fail to increase the event count for pulses of a particular pulse repetition interval, then a decision may be taken that the respective burst has finished.

The ACU can thus determine which other pulses in the received train belong to the identified group, and can then eliminate the pulses in that group from consideration when the system attempts to identify other groups.

It should be pointed out that the above method will be capable of identifying two (or more) interleaved bursts with the same PRI, yet shifted starting time instants.

Prediction of time intervals free from radar pulse bursts

As a result of its operation, the arithmetic/control unit ACU will have stored information from which the following parameters for each of the intercepted radar transmissions can be deduced:

1. the pulse repetition interval PRI;
2. the number of pulses per burst;
3. the burst duration;
4. the times of burst arrival;
5. the duration of intervals between bursts.

The above information is sufficient for the arithmetic/control unit ACU to predict time intervals free from radar pulse bursts using techniques which will be readily apparent to the skilled man. The ACU can thus provide a clear-to-transmit signal CT representing these time intervals. A suitable prediction procedure may also be combined with a continuous monitoring of the intercepted pulse signals to improve the quality of prediction, and to react in a timely manner when new emitters may appear.

The clear-to-transmit signal CT is used by a radio transmitter to control the timing of transmissions therefrom. In the communication system formed by the information fusion centre IFC and the sensors of Fig. 1, the signal is sent to the centre IFC, which, in response thereto, controls the timing of transmissions of information from the centre IFC to the sensors, and from the sensors to the centre IFC

The techniques described above are also described in EP-A-1777531 and WO 2007/049022. Below are described examples of specific modifications which may be made to the above-described techniques.

In the above-mentioned illustrative arrangement, the arrangement is such that, after selection of a candidate pulse, processing is performed to locate a priming quintuple, i.e. five pulses with substantially equal pulse repetition intervals, the candidate pulse being the central pulse. As indicated, instead of locating five pulses, it is possible to locate a set of three pulses. In addition, it is not necessary (i) for the process to attempt to locate a sequence of pulses with the candidate pulse at the centre of the sequence; or (ii) for the process to locate a sequence comprising an odd number of pulses. For example, it may in some applications be useful to analyse groups containing four pulses. Thus, the processes described above in connection with Figs. 5 and 6 can be modified by disregarding possible level-two successors or level-two predecessors, to find a group of four pulses, forming a priming quadruplet, and then to calculate the most probable pulse repetition interval based on those pulses.

As mentioned above with reference to Fig. 5, the peaks in the histogram may be influenced by such factors as time quantisation effects and noise-caused jitter in the time-of-arrival measurements. The peaks would also be influenced by deliberate displacement of the pulses from their nominal positions, which occurs in some types of pulse trains. In order to deal with any one or any combination of these factors, according to a modified arrangement, instead of determining the time of arrival of each pulse relative to the candidate pulse, average values of the relative times of arrival of pulses are determined. This is preferably accomplished by using a moving window of a suitable selected span and counting events falling within the window.

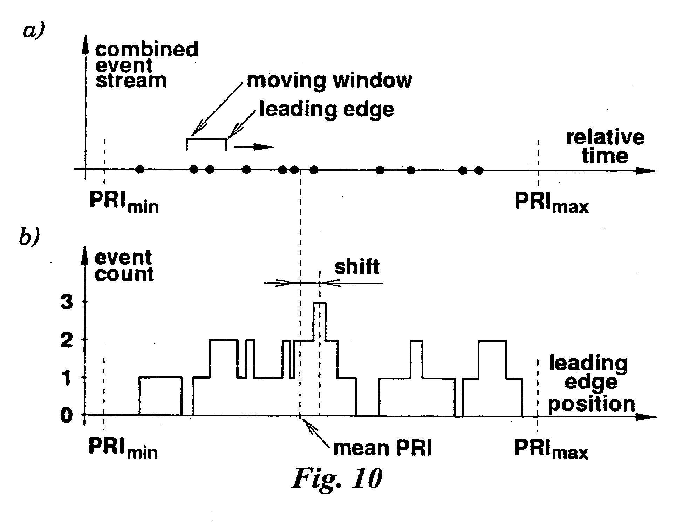

Fig. 10 schematically illustrates an example of this technique. An arrangement using this modified technique would be identical to the embodiment described above, except that the method for preliminary determination of a candidate pulse repetition interval would be as described with reference to Fig. 10, rather than Fig. 5. Fig. 10a, like Fig. 5a, represents the measured times of arrival of the pulse events after the appropriate shifting and scaling operations, so that each event has associated therewith a value representing the absolute difference between the time of the event and the time-of-arrival of the candidate pulse, divided by an integer if necessary to place it within the predetermined interval $PRI_{min}$ to $PRI_{max}$. In Fig. 10a, however, there is also represented the span of a moving window. The window is progressively shifted (by amounts less than the window width), and at each of its positions the events within the window are counted. Fig. 10b shows the result, i.e. the number of events observed within the moving window as the window is shifted. Fig. 10 relates to an example for detecting a pulse quadruplet, wherein the pulse timings are deliberately staggered. Hence, there are no coincident events in the combined stream. However, when a window of a predetermined span is shifted in time, at some window positions a cluster of three events will be observed within the window. Accordingly, the detection of a quadruplet will be declared, and the mean PRI will be determined from the corresponding central position of the window.

Fig. 10b shows that the event count peak is shifted by half the window span with respect to the true location of the event cluster, because the figure shows the number of events as a function of the leading edge of the window. Instead of using a single window, two counter-propagating windows could be used, one starting at $PRI_{min}$ and one at $PRI_{max}$.

The techniques described with reference to Fig. 9 can also be modified in a corresponding way to use one or more moving windows.

In the arrangements described above, a group of pulses is selected in accordance with their times-of arrival relative to the time-of arrival of a chosen candidate pulse. In some circumstances it may desirable to select, as a reference point, a candidate moment in time, instead of the time-of an-ival of an observed pulse. In other words, it is possible to use a virtual (unobservable) pulse, instead of an actual (observed) pulse as the candidate pulse. This may for example be advantageous in the analysis of short pulse bursts with staggered pulses. The candidate moment may for example be selected according to the times-of arrival of observed pulses (e.g. the mid-point between two times-of-arrival), and is preferably at or near the centre of the range of arrival times of the pulses being considered as candidates to form the group. Alternatively, there may be an iterative process for repeatedly selecting different candidate moments, each separated by a predetermined time interval from a preceding candidate moment. Other than the use of a candidate moment instead of the time-of-arrival of an observed pulse, the operation may be exactly as set out above in connection with the previously-described arrangements.

It will be appreciated from the foregoing that a selected candidate moment which is not coincident with the time-of-arrival of an observed pulse can be used in place of the time-of-arrival of a candidate pulse for (i) categorising pulses into groups, and/or (ii) determining approximate repetition intervals which are then used to calculate an average group pulse repetition interval.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

## Claims

1. A method of analysing a received signal containing a train of pulses occurring at respective times of arrival, the method comprising:

(a) forming a group of pulses such that pulses within the group have a substantially uniform pulse repetition interval within a range defined by predetermined minimum and maximum values; and
(b) calculating an average group pulse repetition interval by:

(i) for each of a plurality of pulses in the group, determining a respective approximate repetition interval, wherein each approximate repetition interval is determined from the difference between the time of arrival of that pulse and a common, selected moment which is not coincident with a time-of-arrival of a pulse;
(ii) determining a vector from each said approximate repetition interval by performing a linear mapping process such that the range between the predetermined minimum and maximum values is represented by an arc of a length which is less than or equal to $\pi$;
(iii) determining the angle of a vector sum of the determined vectors; and
(iv) performing an inverse of said mapping process to derive said average group pulse repetition interval from the angle of said vector sum.

2. A method as claimed in claim 1, wherein the common, selected moment is at or near the centre of the range of arrival times of the pulses in the group.

3. A method as claimed in claim 1 or claim 2, wherein the angle of the vector sum is calculated using a weighting process such that the influence of each pulse increases with an increase of the interval between the time of arrival of the pulse and the selected moment.

4. A method as claimed in any preceding claim, including the step of calculating, from the determined vectors, a dispersion value indicative of the dispersion of differences between arrival times.

5. A method as claimed in claim 4, including the step of deriving a set of pulses from said train by excluding the pulses classified into said group, and then assigning pulses in said set to another group, the excluding step being conditional on said dispersion value.

6. A method as claimed in any preceding claim, wherein step (a) comprises:

(I) selecting a candidate moment and calculating at least first and second predetermined time ranges respectively before and after the candidate moment;
(II) for those pulses with times of arrival within said predetermined time ranges, deriving count values each associated with a respective time interval and each dependent on the number of such pulses for which the absolute difference between the time of arrival of the respective pulse and the candidate moment is substantially equal to an integer multiple of said time interval; and
(III) if one of said count values exceeds a predetermined threshold, assigning the pulses associated with said one count value to the pulse group.

7. A method as claimed in claim 6, wherein the selected moment is the candidate moment.

8. A method as claimed in claim 6 or 7, including the step of repeating steps (I) to (III) after excluding from consideration the pulses classified into said group, in order to assign some of the remaining pulses to another group.

9. A method as claimed in any one of claims 6 to 8, wherein the first and second ranges extend from respective minimum range values which differ from the candidate moment by a first finite predetermined amount to respective maximum range values which differ from the candidate moment by a second finite predetermined amount.

10. A method as claimed in claim 9, including third and fourth ranges extending from respective minimum range values which differ from the candidate moment by twice said first finite predetermined amount to respective maximum range values which differ from candidate moment by twice said second finite predetermined amount.

11. A method as claimed in any one of claims 6 to 10, wherein steps (I) to (III) are successively repeated with first and second predetermined time ranges which extend progressively further from the candidate moment.

12. A method as claimed in any one of claims 6 to 11, wherein each count value represents the number of pulses for which said absolute difference is equal to an integer multiple of a value which lies within a window defining a predetermined range containing said time interval, the method including the step of shifting the window to obtain count values for other time intervals.

13. A method as claimed in any preceding claim, including the step of determining that pulses classified into the same group occur in bursts, the method including the step of deriving information indicative of the durations of the bursts and the intervals therebetween.

14. A method as claimed in any preceding claim, including the step of calculating an interval in which no classified pulses are expected to appear and generating a signal representing that interval.

15. Apparatus arranged to operate according to a method as claimed in any preceding claim.

16. A transmission system including apparatus according to claim 15 arranged to operate according to a method as claimed in claim 14, and further including transmission means for transmitting an electromagnetic signal, and control means for enabling the operation of the transmission means in response to said period-representing signal.

**Patentansprüche**

1. Verfahren zum Analysieren eines empfangenen Signals, das einen Zug von Impulsen umfasst, die zu entsprechenden Empfangszeitpunkten auftreten, wobei das Verfahren Folgendes umfasst:

(a) Bilden einer Gruppe von Impulsen, derart, dass Impulse innerhalb der Gruppe ein im Wesentlichen gleichförmiges Impulsfolgeintervall innerhalb eines Bereichs aufweisen, der durch vorbestimmte Mindest- und Höchstwerte definiert ist; und
(b) Berechnen eines durchschnittlichen Gruppen-Impulsfolgeintervalls durch:

(i) Bestimmen eines entsprechenden ungefähren Folgeintervalls für jeden der mehreren Impulse in der Gruppe, wobei jedes ungefähre Folgeintervall von der Differenz zwischen dem Empfangszeitpunkt dieses Impulses und einem gemeinsamen ausgewählten Augenblick bestimmt wird, der nicht mit einem Empfangszeitpunkt eines Impulses übereinstimmt;
(ii) Bestimmen eines Vektors von jedem ungefähren Folgeintervall durch Durchführen eines linearen Abbildungsverfahrens, derart, dass der Bereich zwischen den vorbestimmten Mindest- und Höchstwerten durch einen Bogen mit einer Länge dargestellt wird, die kleiner oder gleich $\Pi$ ist;
(iii)Bestimmen des Winkels einer Vektorsumme der bestimmten Vektoren; und
(iv) Durchführen einer Umkehrung des Abbildungsverfahrens zum Ableiten des durchschnittlichen Gruppen-Impulsfolgeintervalls vom Winkel der Vektorsumme.

2. Verfahren nach Anspruch 1, wobei der gemeinsame ausgewählte Zeitpunkt in der Mitte des Bereichs von Empfangszeitpunkten der Impulse in der Gruppe oder in der Nähe davon liegt.

3. Verfahren nach Anspruch 1 oder Anspruch 2, wobei der Winkel der Vektorsumme unter Verwendung eines Gewichtungsverfahrens berechnet wird, derart, dass der Einfluss jedes Impulses mit einer Zunahme des Intervalls zwischen dem Empfangszeitpunkt des Impulses und dem ausgewählten Zeitpunkt zunimmt.

4. Verfahren nach einem der vorhergehenden Ansprüche, das den Schritt des Berechnens eines Streuungswerts, der die Streuung von Differenzen zwischen Empfangszeitpunkten anzeigt, von den bestimmten Vektoren umfasst.

5. Verfahren nach Anspruch 4, das den Schritt des Ableitens einer Menge von Impulsen von dem Zug durch Ausschließen der in diese Gruppe eingeordneten Impulse und dann das Zuordnen von Impulsen in der Menge zu einer anderen Gruppe umfasst, wobei der Schritt des Ausschließens von dem Streuungswert abhängig ist.

6. Verfahren nach einem der vorhergehenden Ansprüche, wobei Schritt (a) Folgendes umfasst:

(I) Auswählen eines Kandidatenzeitpunkts und Berechnen von mindestens einem ersten und einem zweiten vorbestimmten Zeitbereich vor beziehungsweise nach dem Kandidatenzeitpunkt;
(II) Ableiten von Zählwerten, die jeweils einem entsprechenden Zeitintervall zugehörig sind und jeweils von der Anzahl solcher Impulse abhängig sind, für die die absolute Differenz zwischen dem Empfangszeitpunkt des entsprechenden Impulses und dem Kandidatenzeitpunkt im Wesentlichen gleich einer Ganzzahl ist, die ein Vielfaches des Zeitintervalls ist, für diejenigen Impulse mit Empfangszeitpunkten innerhalb der vorbestimmten Zeitbereiche; und

(III) wen einer der Zählwerte einen bestimmten Schwellenwert überschreitet, Zuordnen der dem einen Zählwert zugehörigen Impulse zu der Impulsgruppe.

**7.** Verfahren nach Anspruch 6, wobei der ausgewählte Zeitpunkt der Kandidatenzeitpunkt ist.

**8.** Verfahren nach Anspruch 6 oder 7, das nach dem Ausschließen der in die Gruppe eingeordneten Impulse von der Berücksichtigung den Schritt des wiederholens der Schritte (I) bis (III) umfasst, um einige der verbleibenden Impulse einer anderen Gruppe zuzuordnen.

**9.** Verfahren nach einem der Ansprüche 6 bis 8, wobei der erste und der zweite Bereich sich von entsprechenden Mindestbereichswerten, die sich um einen ersten endlichen vorbestimmten Betrag vom Kandidatenzeitpunkt unterscheiden, bis zu entsprechenden Höchstbereichswerten erstrecken, die sich um einen zweiten endlichen vorbestimmten Betrag vom Kandidatenzeitpunkt unterscheiden.

**10.** Verfahren nach Anspruch 9, das einen dritten und einen vierten Bereich umfasst, die sich von entsprechenden Mindestbereichswerten, die sich um das Zweifache des ersten endlichen vorbestimmten Betrags vom Kandidatenzeitpunkt unterscheiden, bis zu entsprechenden Höchstbereichswerten erstrecken, die sich um das zweifache des zweiten endlichen vorbestimmten Betrags vom Kandidatenzeitpunkt unterscheiden.

**11.** Verfahren nach einem der Ansprüche 6 bis 10, wobei die Schritte (I) bis (III) nacheinander mit einem ersten und einem zweiten vorbestimmten Zeitbereich wiederholt werden, die sich schrittweise vom Kandidatenzeitpunkt weiter erstrecken.

**12.** Verfahren nach einem der Ansprüche 6 bis 11, wobei jeder Zählwert die Anzahl von Impulsen darstellt, für die die absolute Differenz gleich einer Ganzzahl ist, die ein Vielfaches eines Werts ist, der innerhalb eines Fensters liegt, das einen vorbestimmten Bereich definiert, der das Zeitintervall enthält, wobei das Verfahren den Schritt des Verschiebens des Fensters zum Erhalten von Zählwerten für andere Zeitintervalle umfasst.

**13.** Verfahren nach einem der vorhergehenden Ansprüche, das den Schritt des Bestimmens umfasst, dass Impulse, die in dieselbe Gruppe eingeordnet sind, in Bündeln auftreten, wobei das Verfahren den Schritt des Ableitens von Informationen umfasst, die die Dauern der Bündel und der Intervalle dazwischen angeben.

**14.** Verfahren nach einem der vorhergehenden Ansprüche, das den Schritt des Berechnens eines Intervalls, in dem kein Auftreten eingeordneter Impulse erwartet wird, und das Erzeugen eines Signals umfasst, das dieses Intervall darstellt.

**15.** Vorrichtung, die aufgebaut ist, um gemäß einem Verfahren nach einem der vorhergehenden Ansprüche zu arbeiten.

**16.** Übertragungssystem, das eine Vorrichtung nach Anspruch 15 umfasst, die aufgebaut ist, um nach einem Verfahren nach Anspruch 14 zu arbeiten, und ferner Übertragurgsmittel zum Übertragen eines elektromagnetischen Signals und Steuermittel zum Ermöglichen der Arbeit der Übertragungsmittel als Reaktion auf das periodendarstellende Signal umfasst.

**Revendications**

**1.** Procédé d'analyse d'un signal reçu qui contient un train d'impulsions qui apparaissent à des instants d'arrivée respectifs, le procédé comprenant les étapes consistant à :

(a) former un groupe d'impulsions de telle sorte que les impulsions qui se situent à l'intérieur du groupe présentent un intervalle de répétition d'impulsion sensiblement uniforme à l'intérieur d'une plage définie par des valeurs minimum et maximum prédéterminées ; et
(b) calculer un intervalle de répétition d'impulsion de groupe moyen de la façon suivante :

(i) pour chacune d'une pluralité d'impulsions dans le groupe, déterminer un intervalle de répétition approximatif respectif, dans lequel chaque intervalle de répétition approximatif est déterminé à partir de la différence entre l'instant d'arrivée de cette impulsion et un instant sélectionné commun qui ne coïncide pas avec un instant d'arrivée d'une impulsion ;

(ii) déterminer un vecteur à partir de chaque dit intervalle de répétition approximatif en exécutant un procédé de mappage linéaire de telle sorte que l'intervalle entre les valeurs minimum et maximum prédéterminées soit représenté par un arc qui présente une longueur qui est inférieure ou égale à π ;

(iii) déterminer l'angle d'une somme de vecteurs des vecteurs déterminés ; et

(iv) exécuter l'inverse dudit procédé de mappage de manière à obtenir ledit intervalle de répétition d'impulsion de groupe moyen à partir de l'angle de ladite somme de vecteurs.

2. Procédé selon la revendication 1, dans lequel l'instant sélectionné commun se situe au niveau du centre, ou à proximité de celui-ci, de la plage d'instants d'arrivée des impulsions dans le groupe.

3. Procédé selon la revendication 1 ou la revendication 2, dans lequel l'angle de la somme de vecteurs est calculé en utilisant un procédé de pondération de telle sorte que l'influence de chaque impulsion augmente avec une augmentation de l'intervalle entre l'instant d'arrivée de l'impulsion et l'instant sélectionné.

4. Procédé selon l'une quelconque des revendications précédentes, comprenant l'étape consistant à calculer, à partir des vecteurs déterminés, une valeur de dispersion indicative de la dispersion des différences entre les instants d'arrivée.

5. Procédé selon la revendication 4, comprenant l'étape consistant à obtenir un ensemble d'impulsions à partir dudit train en excluant les impulsions classées dans ledit groupe, et ensuite en attribuant des impulsions dans ledit ensemble à un autre groupe, l'étape d'exclusion étant fonction de ladite valeur de dispersion.

6. Procède selon l'une quelconque des revendications précédentes, dans lequel l'étape (a) comprend les étapes consistant à :

(I) sélectionner un instant candidat et calculer au moins des première et deuxième plages de temps prédéterminées respectivement avant et après l'instant candidat ;

(II) pour les impulsions dont les instants d'arrivée se situent à l'intérieur desdites plages de temps prédéterminées, obtenir des valeurs de compte dont chacune est associée à un intervalle de temps respectif et dont chacune dépend du nombre des impulsions pour lesquelles la différence absolue entre l'instant d'arrivée de l'impulsion respective et l'instant candidat est sensiblement égale à un multiple entier dudit intervalle de temps ; et

(III) si l'une desdites valeurs de compte dépasse un seuil prédéterminé, attribuer les impulsions associées à ladite valeur de compte au groupe d'impulsions.

7. Procédé selon la revendication 6, dans lequel l'instant sélectionné est l'instant candidat.

8. Procédé selon la revendication 6 ou la revendication 7, comprenant l'étape consistant à répéter les étapes (I) à (III) après avoir exclu de la prise en considération les impulsions classées dans ledit groupe, de façon à attribuer certaines des impulsions restantes à un autre groupe.

9. Procédé selon l'une quelconque des revendications 6 à 8, dans lequel les première et deuxième plages s'étendent à partir des valeurs de plage minimum respectives qui diffèrent de l'instant candidat par une première quantité prédéterminée finie, jusqu'aux valeurs de plage maximum respectives qui diffèrent de l'instant candidat par une deuxième quantité prédéterminée finie.

10. Procédé selon la revendication 10, dans lequel des troisième et quatrième plages s'étendent à partir des valeurs de plage minimum respectives qui diffèrent ; de l'instant candidat de deux fois ladite première quantité prédéterminée finie, jusqu'aux valeurs de plage maximum respectives qui diffèrent de l'instant candidat de deux fois ladite deuxième quantité prédéterminée finie.

11. Procédé selon l'une quelconque des revendications 6 à 10, dans lequel les étapes (I) à (III) sont répétées de manière successive avec les première et deuxième plages de temps prédéterminées qui s'étendent de façon progressive plus à partir de l'instant candidat.

12. Procédé selon l'une quelconque des revendications 6 à 11, dans lequel chaque valeur de compte représente le nombre d'impulsions pour lesquelles ladite différence absolue est égale à un multiple entier d'une valeur qui se trouve à l'intérieur d'une fenêtre qui définit une plage prédéterminée qui contient ledit intervalle de temps, le procédé comprenant l'étape consistant à décaler la fenêtre de manière à obtenir des valeurs de compte pour d'autres intervalles de temps.

13. Procédé selon l'une quelconque des revendications précédentes, comprenant l'étape consistant à déterminer que les impulsions classées dans le même groupe apparaissent en salves, le procédé comprenant l'étape consistant à obtenir des informations indicative des durées des salves et des intervalles entre celles-ci.

14. Procédé selon l'une quelconque des revendications précédentes, comprenant l'étape consistant à calculer un intervalle dans lequel aucune apparition d'impulsion classée n'est attendue et à générer un signal qui représente cet intervalle.

15. Appareil agence de manière à fonctionner selon un procédé selon l'une quelconque des revendications précédentes.

16. Système de transmission comprenant l'appareil selon la revendication 15 agencé de manière à fonctionner selon un procédé selon la revendication 14, et comprenant en outre des moyens de transmission destinés à transmettre un signal électromagnétique, et des moyens de commande destinés à permettre le fonctionnement des moyens de transmission en réponse audit signal qui représente une période.

**Fig. 1**

**Fig. 2**

Fig. 3

**Fig. 4**

**Fig. 5**

**Fig. 6**

**Fig. 7**

*Fig. 8*

**event stream**

frame
with pivot

frame 7 | frame 5 | frame 3 | frame 1 | frame 2 | frame 4 | frame 6

time of
arrival

**impulse template**

time of
arrival

PRI

**frames**

frame 1

frame time

frame 2

frame time

frame 3

frame time

frame 4

frame time

frame 5

frame time

frame 6

frame time

frame 7

frame time

add
events
across
frames

**event count**

7

5 — — — decision
threshold

3

1

frame time

0     PRI

*Fig. 9*

*a)*

combined
event
stream

moving window

leading edge

relative
time

PRI$_{min}$

PRI$_{max}$

*b)*

event
count

shift

3

2

1

0

PRI$_{min}$

mean PRI

leading
edge
position

PRI$_{max}$

*Fig. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1505772 A1, Kruys
- US 6831589 B2, Shearer III
- US 20040156336 A1, McFarland
- US 20040151137 A1, McFarland
- US 6697013 B2, McFarland
- WO 03050560 A
- US 20040033789 A1, Tsien

- US 20030214430 A1, Husted
- US 20030206130 A1, Husted
- US 20020155811 A1, Prismantas
- WO 02082844 A3, Zimmermann
- EP 1248477 A1
- EP 1777531 A
- WO 2007049022 A

**Non-patent literature cited in the description**

- **New techniques for the deinterleaving of repetitive sequences ; H.K. Marida.** IEE Proceedings F. Communications, Radar Signal Processing. Institution of Electrical Engineers, vol. 136, 149-154